# FASCICULE DE BREVET EUROPEEN

(11) **EP 3 652 028 B1**
(45) Date de publication et mention de la délivrance du brevet: **10.01.2024**
(21) Numéro de dépôt: 18724223.5
(22) Date de dépôt: 09.05.2018
(51) Int. Cl.: B60T 7/04, B60T 11/18

(54) **SYSTÈME DE FREINAGE ÉLECTRONIQUE DÉCOUPLÉ AVEC UN DISPOSITIF DE TRANSMISSION DE MOUVEMENT À COMPENSATION DES EFFETS RADIAUX**
SYSTEME DE FREINAGE ELECTRONIQUE DECOUPLE AVEC UN DISPOSITIF DE TRANSMISSION DE MOUVEMENT A COMPENSATION DES EFFETS RADIAUX
DECOUPLED ELECTRONIC BRAKING SYSTEM HAVING A MOVEMENT TRANSMISSION DEVICE WITH COMPENSATION OF RADIAL EFFECTS

(30) Priorité: 13.07.2017 FR 1756686
(43) Date de publication de la demande: 20.05.2020
(73) Titulaire: Robert Bosch GmbH, 70442 Stuttgart (DE)
(72) Inventeur: SPROCQ, Raynald, 77450 Esbly (FR); ANDERSON, Chris, 75002 Paris (FR); YVONET, Florent, 77470 Trilport (FR)
(86) Numéro de dépôt international: PCT/EP2018/062161
(87) Numéro de publication internationale: WO 2019/011504

(56) Documents cités:
- WO-A1-2010/006978
- WO-A1-2011/026804
- WO-A1-2015/165450
- FR-A1- 2 828 533
- US-A1- 2016 016 569

## Description

### Domaine de l'invention

La présente invention se rapporte à un système de freinage électronique découplé avec un dispositif de transmission de mouvement reliant la pédale de frein à l'actionneur électrohydraulique de frein et comportant une tige de commande reliée à la pédale de frein et un poussoir en forme de piston guidé dans un cylindre de l'actionneur, le poussoir étant relié à l'extrémité de la tige de commande par une liaison à rotule et rappelé contre la poussée de la tige de commande par un ressort de rappel et le poussoir a une surface d'appui en forme de coupelle recevant librement en rotation / pivotement la rotule de la tige de commande.

### Etat de la technique

Les systèmes de freinage électroniques, découplés, sont utilisés de plus en plus dans les véhicules hybrides permettant le freinage dynamique ou/et la souplesse du réglage de la sensation de pédale en fonction de la demande.

Dans un système de freinage découplé, l'actionneur qui génère la pression dans le circuit hydraulique des freins n'est pas commandé directement par la poussée de la pédale, transmise au poussoir par la tige de commande, mais par un signal électronique généré à partir de ce mouvement de poussée de la pédale. Le signal commande alors l'actionneur en fonction de la demande de freinage. Du fait de ce découplage physique, comme l'actionneur ne peut appliquer directement une réaction sur le poussoir et la tige de commande, représentant la réaction du circuit de freinage, un simulateur de freinage le remplace et imite la réaction du système de freinage classique, en retour sur la pédale de frein.

Le document US2016016569 A1 divulgue par exemple un amplificateur électrique utilisable avec un simulateur de course monté dans le dispositif de freinage d'une automobile selon l'art antérieur.

En d'autres termes, dans de tels systèmes, l'extrémité de la tige de commande reliée à la pédale de frein est directement reliée à un poussoir hydraulique coulissant dans l'actionneur de frein, contrairement aux systèmes classiques dans lesquels la tige d'actionnement est reliée à un composant pneumatique ou électrique de servofrein qui transmet la force d'entrée amplifiée par les composants de l'unité d'actionnement. Ainsi, le composant hydraulique coulissant et les caractéristiques de guidage sont directement soumis à toutes les forces venant de la pédale lorsque le conducteur les applique ou libère la pédale dans différentes situations de freinage. De tels composants sont, de manière caractéristique, beaucoup plus sensibles à l'usure et aux incidents que ceux d'un servofrein connu.

De plus, en l'absence de servofrein intermédiaire entre la pédale de frein et les composants hydrauliques de l'actionneur, les charges transversales transmises par la boite de la pédale vers les composants hydrauliques par l'intermédiaire de la tige de commande provoquent une usure prématurée conduisant à une fuite prématurée des composants d'étanchéité du circuit hydraulique.

La tige de commande d'un actionneur de frein tel qu'un servofrein pneumatique ou électromécanique nécessite un certain degré de liberté pour fonctionner selon les impératifs cinématiques imposés par le mouvement de la pédale de frein actionnée par le conducteur.

L'actionneur est fixé par son socle au tablier séparant l'habitacle du véhicule à l'enceinte du moteur et la tige de commande traverse un passage réalisé dans le tablier pour être reliée à la pédale de frein ou à son boîtier.

Dans le cas d'un actionneur constitué par un servofrein pneumatique, du fait de sa structure interne, la tige de commande est naturellement alignée sur l'axe du poussoir lorsqu'elle est encore libre, avant la mise en place de l'actionneur avec la tige de commande dans le véhicule et la fixation de sa seconde extrémité à la pédale de frein, la première étant reliée au dispositif de pilotage du servofrein par une liaison à rotule.

Mais, dans le cas des actionneurs découplés, la tige de commande n'est pas naturellement maintenue dans l'axe du poussoir. Elle peut pivoter librement dans l'angle solide défini par les caractéristiques de forme du poussoir. Or, pour monter l'actionneur de frein dans le véhicule, l'opérateur doit tout d'abord faire passer l'extrémité de la tige de commande à travers un orifice du tablier puis appliquer le socle de l'actionneur contre le tablier et le fixer à celui-ci par des boulons.

Dans le cas des actionneurs électromécaniques ou électro-hydrauliques, cette opération de montage est relativement délicate du fait même de la liberté de mouvement de la tige de commande par rapport à l'actionneur, puisque la tige de commande pivote sous l'effet de son poids et ne reste pas dans l'axe du poussoir. L'opérateur doit donc tâtonner pour faire passer la tige dans l'orifice du tablier.

A cela s'ajoute la difficulté d'accéder à l'intérieur de l'enceinte du moteur du véhicule et de la position peu confortable de l'opérateur pour mettre en place cet actionneur. Cela se traduit par une opération relativement longue et donc coûteuse et par ailleurs un risque d'endommagement des contacts par choc avec l'environnement.

### But de l'invention

La présente invention a pour but de développer un système de freinage électronique découplé, comportant un dispositif de transmission de mouvement reliant la pédale de frein à l'actionneur de frein, facilitant sa mise en place et son montage dans le véhicule et réduisant la durée de l'opération et compensant les effets radiaux appliqués à la tige de commande.

### Exposé et avantages de l'invention

A cet effet, la présente invention a pour objet un système de freinage électronique découplé comportant un dispositif de transmission de mouvement reliant la pédale de frein à l'actionneur de frein du type défini ci-dessus, caractérisé en ce que la tige de commande comporte un moyen de rappel élastique de la tige de commande vers l'axe du cylindre du poussoir, ce moyen de rappel étant porté par le poussoir.

Le moyen de rappel élastique permet ainsi non seulement le maintien de la tige de commande dans l'axe du dispositif pour la phase initiale de montage, mais il assure aussi, et cela pendant toute la durée de vie du dispositif, la compensation au moins partielle du couple de basculement que la tige de commande (en position de fonctionnement qui est la position inclinée) induit dans le poussoir et en provoque l'usure et les défauts d'étanchéité.

Suivant une autre caractéristique, le moyen de rappel élastique vers l'axe comprend l'extrémité de la tige de commande comportant une rotule en forme de calotte sphérique ayant une surface d'appui avant sphérique et une surface arrière plane, perpendiculaire à l'axe de la tige de commande, un manchon entourant librement la tige de commande coulissant dans un alésage du poussoir et s'appuyant, perpendiculairement à l'axe du poussoir, contre la face arrière de la calotte sphérique, un ressort prenant appui sur le poussoir et sur le manchon de centrage pour pousser celui-ci et basculer la calotte sphérique et la tige de commande dans l'axe du poussoir contre le poids de la tige de commande.

En particulier, le manchon comporte une collerette contre laquelle s'appuie d'un côté la surface arrière plane de la calotte et de l'autre le ressort de centrage.

Ainsi, le manchon peut s'appuyer directement sur la face arrière plane de la calotte pour la faire basculer perpendiculairement à l'axe du poussoir soit s'appuyer par une collerette intérieure sur la face plane de la calotte, elle-même engagée partiellement dans le manchon, d'un côté de la collerette, le ressort de centrage étant appuyé contre l'autre côté de la collerette.

Le maintien de la tige de commande dans l'axe du poussoir facilite considérablement la mise en place de l'actionneur car l'opérateur a naturellement la tige de commande dans l'axe du poussoir. Cette orientation de la tige de commande est bien définie et se repère facilement de sorte que l'opérateur peut, très rapidement, glisser l'extrémité de la tige de commande dans l'orifice du tablier et fixer le socle de l'actionneur au tablier.

Ce gain de temps pour l'opération est extrêmement important étant donné le grand nombre de telles opérations sur une chaîne de montage. De plus, l'opération est beaucoup plus simple pour l'opérateur qui enregistre facilement cette orientation dans l'axe de sorte que très rapidement, l'opération devient totalement automatique pour lui.

Selon une autre caractéristique avantageuse, le moyen de rappel élastique de la tige de commande vers l'axe est un anneau élastique engagé sur la tige de commande, cet anneau étant retenu en place dans le poussoir par une gorge intérieure du poussoir et, l'anneau est engagé de manière serrée sur la tige de commande pour que sa compression par la tige de commande déviée de l'axe du poussoir contre la surface intérieure du poussoir génère un couple de rappel vers l'axe.

Cette solution a l'avantage de la simplicité de l'économie au détriment d'une précision poussée du fonctionnement de compensation.

Suivant une autre caractéristique avantageuse, le poussoir a un alésage dans lequel coulisse le manchon de centrage.

Suivant une autre caractéristique, le ressort de centrage est en appui sur le poussoir par un anneau de retenue bloqué par une bague élastique encastrée dans le poussoir.

### Dessins

La présente invention sera décrite ci-après, de manière plus détaillée à l'aide d'un exemple de réalisation d'un système de freinage électronique découplé comportant un dispositif de transmission reliant la pédale de frein à l'actionneur de frein représenté dans les dessins annexés dans lesquels :
- la figure 1 est une vue en coupe schématique partielle d'un dispositif de transmission connu, avant son installation dans le véhicule,
- la figure 2 est une vue en coupe schématique partielle du dispositif de transmission connu, installé entre la pédale de frein et l'actionneur de freins,
- la figure 3 est une vue en coupe du dispositif de transmission selon l'invention expliquant le rappel de la tige de commande dans l'axe du dispositif,
- la figure 4 montre le dispositif de la figure 3 dans sa position redressée avant l'installation du dispositif dans le véhicule,
- la figure 5 est une vue en coupe du dispositif de transmission selon l'invention en position installée,
- la figure 6 est une vue en coupe d'une variante de réalisation du dispositif de transmission en position installée.

### Description d'un mode de réalisation de l'invention

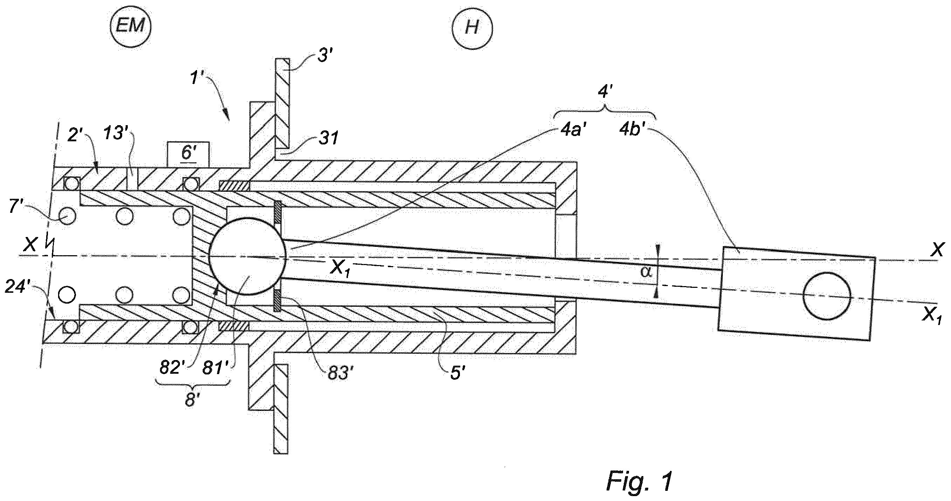

La figure 1 montre un système de freinage électronique découplé, selon l'état de la technique, comportant un dispositif de transmission 1' reliant la pédale de frein non représentée à l'actionneur de frein 2'. La pédale de frein est située côté habitacle H du tablier 3' séparant l'habitacle H et son enceinte de moteur EM logeant l'actionneur de frein 2' et les autres composants non détaillés du système de freinage.

L'actionneur de frein 2' qui est un servofrein électromécanique ou électro-hydraulique non détaillé, reçoit le signal de commande de frein de la pédale de frein. Le mouvement de la pédale de frein actionnée par le conducteur, est transmis par la tige de commande 4' reliant la pédale de frein au poussoir 5'. Le poussoir 5' en forme de piston est guidé dans le cylindre 24' d'axe XX de l'actionneur 2'. Le mouvement du poussoir 5' est détecté par un capteur 6' qui fournit le signal au module électronique générant le signal de commande appliqué au circuit de freinage.

Le poussoir 5', poussé par la tige de commande 4' est rappelé en position neutre, notamment par un ressort de rappel 7'. L'extrémité 4a' de la tige de commande 4' est reliée au poussoir 5' par une liaison à rotule 8' car, le mouvement de pivotement de la pédale de frein impose à la tige de commande 4' un mouvement de pivotement par rapport à l'axe XX du poussoir 5'.

La liaison à rotule 8' est formée par une rotule 81' portée par l'extrémité 4b' de la tige de commande 4' et venant dans une coupelle sphérique 82' du poussoir 5'. La rotule 81' est tenue dans la coupelle 82' par une rondelle élastique 83' encastrée dans une gorge intérieure du poussoir 5' et laissant libre la tige de commande 4'. Dans la position du dispositif de transmission 1', connu, avant son montage dans le véhicule, la tige de commande 4' est inclinée par rapport à l'axe XX de l'angle α par son propre poids.

La chambre délimitée par le cylindre 24' en amont du poussoir 5' peut avoir un ou plusieurs branchements hydrauliques 13' vers d'autres composants du système de freinage et aussi de mise en communication avec le réservoir de liquide de frein en position de repos. Ces différents moyens ne sont qu'évoqués et non détaillés car non directement nécessaires à la compréhension de l'invention.

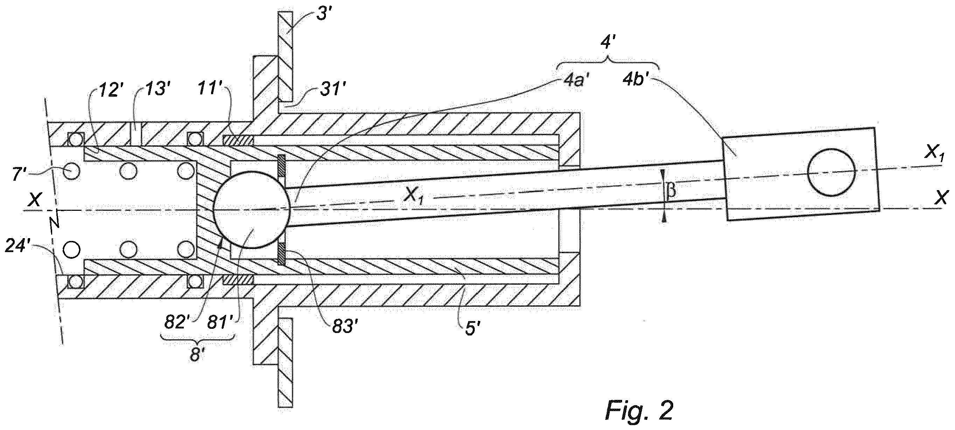

La figure 2 montre le dispositif de transmission 1', connu après son montage, fixé au tablier 3'. La chape à l'extrémité 4b' de la tige de commande 4' est reliée à la pédale de frein non représentée. Dans cette position, la tige de commande 4' d'axe X1X1 est inclinée de l'angle β, (ici au-dessus de l'axe XX), ce qui correspond à la position de repos et aussi à une position d'actionnement par la pédale de frein, l'angle β variant pendant le mouvement d'actionnement.

Dans ces différentes positions, la tige de commande 4' n'agit pas dans l'axe XX du poussoir 5' créant un couple de basculement appliqué au poussoir 5' de sorte que le poussoir s'appuie schématiquement sur les zones de guidage 11', 12' dans le cylindre 24', soit à l'entrée 11' de l'alésage du cylindre 24' et/ou une zone de guidage variable 12' à l'extrémité du poussoir 5', côté ressort 7'. Les zones de guidages actives 11', 12' en haut et/ou en bas du poussoir 5' selon l'orientation de la figure 2 dépendent de la décomposition de l'effort de poussée exercé par la tige de commande 4' selon l'inclinaison β de la tige de commande 4'.

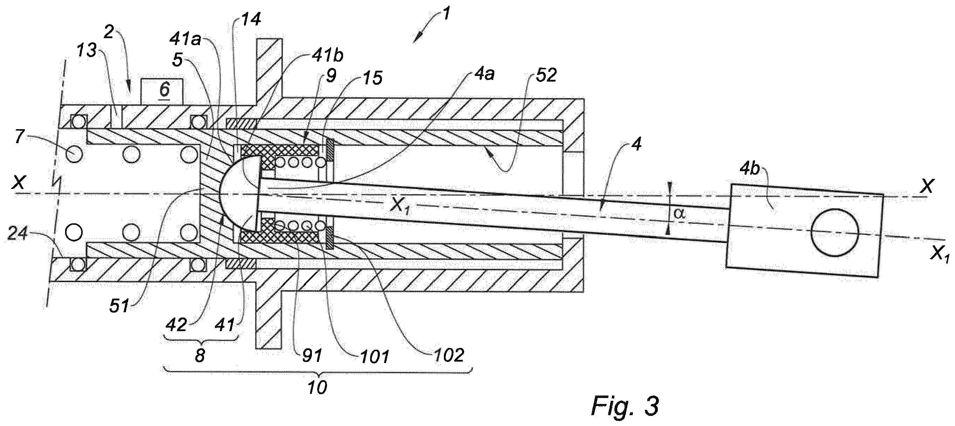

Par comparaison à cet état de la technique, les figures 3, 4, 5 montrent un premier mode de réalisation de l'invention dont la description utilisera les mêmes références numériques qu'aux figures 1 et 2 sans toutefois les compléter par le (') pour désigner les éléments identiques ou analogues.

Selon la figure 3, le système de freinage découplé selon l'invention représentée avant son installation dans le véhicule, comporte un dispositif de transmission 1 reliant la pédale de freins à l'actionneur 2. Le mouvement de la pédale de freins actionnée par le conducteur est transmis par la tige de commande 4 reliée au poussoir 5 guidé dans le cylindre 24 d'axe XX ; son mouvement est détecté par le capteur 6 qui génère le signal de commande pour le circuit de freinage. L'extrémité 4a de la tige 4 est reliée au poussoir 5 par une liaison à rotule 8 combinée à un moyen de rappel élastique 10 de la tige de commande 4 vers/sur l'axe XX du cylindre 24 et suivant le mouvement de translation du poussoir 5. La liaison à rotule 8 est réalisée par une calotte sphérique 41 portée par l'extrémité 4a de la tige de commande 4. La face avant sphérique 41a de la calotte 41 vient dans une coupelle sphérique 42 de même rayon, réalisée dans le fond 51 du poussoir 5. La surface plane de la face arrière 41b de la calotte 41 est perpendiculaire à l'axe X1X1 de la tige de commande 4.

Le diamètre de la calotte 41 est inférieur au diamètre de l'alésage 52 du poussoir 5 côté tourné vers la tige de commande 4.

Un manchon cylindrique 9 entourant librement la tige de commande 4 coulisse dans l'alésage 52 du poussoir 5. Il a intérieurement une collerette 91 et la calotte 41 a un diamètre inférieur au diamètre intérieur du manchon 9 pour se loger au moins partiellement dans le manchon 9 devant la collerette 91. En d'autres termes, la face plane 41b de la calotte 4 s'appuie au moins ponctuellement contre la collerette 91 selon l'inclinaison de l'axe X1X1 de la tige 4. Cette collerette 91 du manchon cylindrique 9 qui constitue ainsi un manchon de centrage est dans un plan perpendiculaire à l'axe XX du poussoir 5.

Un ressort de centrage 101, par exemple, un ressort hélicoïdal de compression ou un empilage de rondelles Belleville, s'appuie sur le poussoir 5 par un anneau de retenue 102 encastré dans le poussoir 5. Le ressort de centrage 101 entoure librement la tige de commande 4.

Le ressort de centrage 101 est engagé partiellement dans le manchon 9 côté tige de commande 4 et s'appuie sur la collerette 91 poussant ainsi le manchon 9 contre la face 41b de la calotte 41.

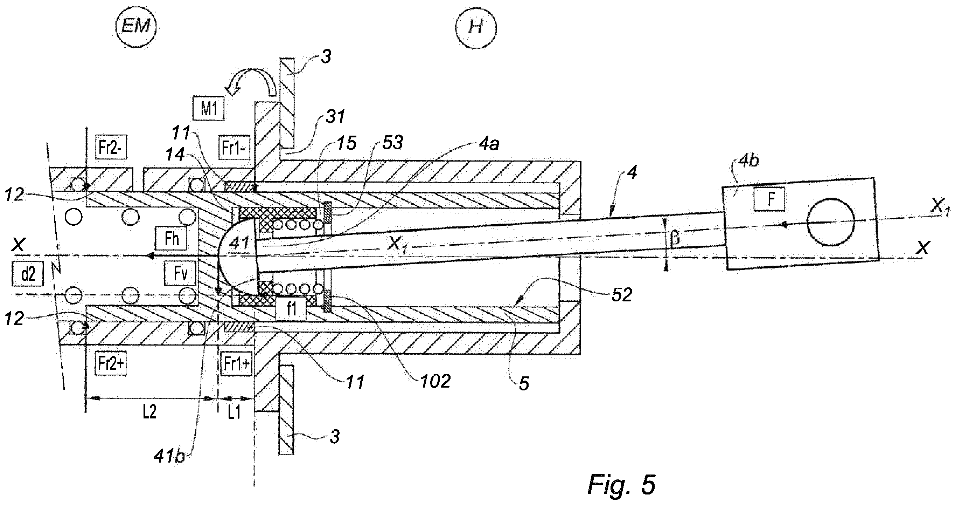

Les composants sont dimensionnés pour qu'en position de repos (figure 5), il subsiste un intervalle 14 entre le manchon 9 et le poussoir 5 et un intervalle 15 entre le manchon 9 et l'anneau de retenue 102.

Avant son montage dans un véhicule, en l'absence du moyen de rappel élastique 10 (calotte sphérique 41 à face arrière 41b plane, manchon 9 et ressort de centrage 101), le dispositif de transmission 1 pivoterait sous l'effet de son poids dans la position X1X1 comme l'indique la figure 3. Cette position est la position limite de pivotement autorisée par la géométrie du poussoir 5. Le poids de la tige 4 s'applique à son centre de gravité de sorte que la tige pivote par sa calotte 41 dans la coupelle 51 autour du centre de l'articulation à rotule 8.

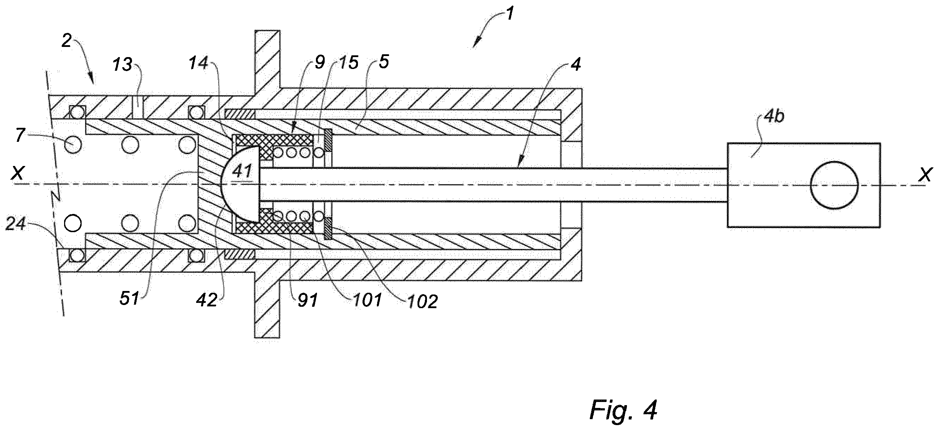

En réalité, dans le dispositif 1 de la figure 3, avant le montage dans le véhicule, le dispositif est dans la position alignée de la figure 4. Cette position précède celle de l'assemblage de l'extrémité 4a à la pédale de frein, qui est la position assemblée représentée à la figure 5.

La figure 3 montre l'inclinaison maximale X1X1 de la tige 4 avant l'installation du servofrein électromécanique 2 et en supposant que le ressort de centrage 101 n'agit pas.

Le point haut du bord de la face plane 41b de la calotte 41 est appuyé contre la collerette 91 du manchon de centrage 9. Le ressort de centrage 101 doit compenser le basculement de la tige de commande 4 en tenant compte aussi du frottement de la calotte 41 dans la coupelle 51.

Le ressort de centrage 101 est dimensionné pour compenser ce mouvement de basculement de la tige de commande 4 de façon qu'avant le montage dans la carrosserie elle soit dans l'axe XX du poussoir 5 pour faciliter le montage du servofrein électromécanique 2 dans le véhicule, c'est-à-dire pour faire passer la tige de commande 4 dans l'ouverture 31 du tablier 3 et fixer ensuite le servofrein au tablier 3.

L'assemblage entre l'extrémité 4b de la tige de commande 4 et la pédale de frein se fait dans un second temps et à partir de l'habitacle H.

Le dimensionnement du ressort de centrage 10 est calculé à partir des indications géométriques de la figure 5 et des caractéristiques physiques de la tige de commande 4 et du poussoir 5.

Pour des raisons à la fois d'encombrement et pour ne pas influencer le mouvement de la tige de commande 4 une fois installée, le ressort de centrage 101 ne doit pas être surdimensionné par rapport à la force calculée, nécessaire à son maintien dans l'alignement du poussoir 5 pour la mise en place du servofrein électromécanique 2.

A titre de simple exemple et avec les données suivantes :

| | |
|---|---|
| Diamètre de la tige de commande | 8 mm |
| Longueur de la tige de commande | 300 mm |
| Matière de la tige de commande | acier |
| Bras de levier | 200 mm |
| Décalage de la force d'alignement | 4,5 mm) |
| Coefficient de frottement de l'articulation à rotule | 0,2. |

par le calcul, on obtient une force de retenue de 28N.

La force de rappel dans le cas de l'exemple numérique ci-dessus est faible et n'intervient pas dans le fonctionnement du dispositif de transmission, une fois installé, bien qu'à ce moment, la tige de commande 4 ne sera pas alignée sur l'axe XX comme montré à la figure 4 et donc soumise à la poussée du ressort de centrage ou de retenue 101. Mais l'effort exercé à ce moment par le ressort 101 bien que négligeable dans cette chaîne cinématique, par rapport au ressort de rappel 7 et à la poussée exercée sur la tige de commande 4 par la pédale de frein, a aussi un effet sur le fonctionnement du dispositif comme cela sera expliqué ci-après à l'aide de la figure 5.

Comme déjà indiqué dans le cas de l'état de la technique, le poussoir 5 a, naturellement deux zones de guidage 11, 12 dans l'alésage du cylindre 24 : l'une 11 entre le poussoir 5 et l'extrémité de l'alésage du cylindre 24 et l'autre 12 entre l'extrémité du poussoir 5 et l'alésage du cylindre 24.

La figure 5 montre le système installé dans un véhicule. Au repos de l'installation, la tige 4 reliée à la pédale de frein fait un angle β en étant relevée par rapport à sa position alignée ; la tige 4 peut éventuellement être inclinée en dessous de l'axe XX.

Au début, lorsque la pédale de frein est appliquée, la force d'entrée F se décompose en des composantes horizontale Fh et verticale Fv au niveau de l'interface entre l'extrémité 4a de la tige 4 et le poussoir 5. La composante verticale Fv se répartit entre les zones de guidage 11, 12 selon des distances L1, L2. Ces composantes de force réparties peuvent être orientées vers le bas ou vers le haut suivant la position du point de contact entre l'alésage du cylindre 24 et le poussoir 5 par rapport à la zone de guidage 11 et en fonction de la position angulaire de la tige 4 par rapport à sa position alignée axialement, c'est-à-dire vers le haut ou vers le bas. La figure 5 montre le contact initialement à gauche de la zone de guidage 11, ce qui signifie que la réaction pousse sur les zones de contact 11, 12 du cylindre 24 dans le sens montant pour la partie basse de l'alésage (Fr1+Fr2+).

Si toutefois ce point de contact est initialement à droite de la zone de guidage 11, la réaction FR2 est descendante dans la partie supérieure de l'alésage 24. Puis, lorsque la pédale est activée, le point de contact se rapproche de la zone de guidage 11 et éventuellement il coïncide avec la zone de guidage, finalement il se déplace vers la gauche de celle-ci. A ce point, la force Fr2 est orientée vers le haut dans la partie basse du cylindre 24.

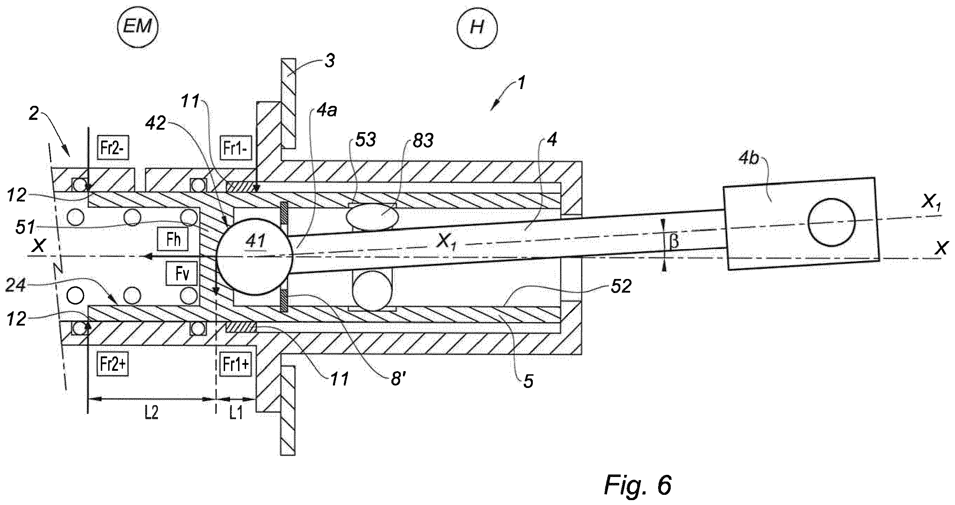

La figure 6 montre un autre mode de réalisation du dispositif de transmission 1 et de son moyen de rappel élastique 10, formé ici par un anneau élastique 83 de l'invention dans lequel l'articulation à rotule 8 entre l'extrémité 4a de la tige commande 4 et le poussoir 5 est constituée par une rotule 41 retenue dans la coupelle 42 du fond 51 par un anneau 8' encastré dans le poussoir 5 et traversé librement par la tige de commande 4. L'anneau élastique 83 engagé sur la tige de commande 4 est retenu longitudinalement (selon l'axe XX) dans le poussoir 51 par une gorge 53. Le montage de l'anneau élastique 83 entre le poussoir 5 et la tige 4 est serré de manière à rappeler élastiquement la tige de commande 4 vers l'axe XX pour le montage du dispositif de transmission 1 dans le véhicule. Ensuite, en position installée, un couple de rappel est appliqué sur le poussoir 5, compensant au moins partiellement les efforts appliqués sur le poussoir par la tige de commande 4, inclinée de l'angle de fonctionnement β par rapport à l'axe XX du mouvement du poussoir 5 dans le cylindre 24.

En conclusion, et en résumé, la figure 4 montre schématiquement le premier mode de réalisation du dispositif de transmission 1 avec son moyen de rappel élastique 10 de la tige de commande dans l'axe XX du poussoir 5, avant l'installation du dispositif dans le véhicule ; le moyen de rappel élastique 10 de la tige de commande 4 dans l'axe XX étant composé de la calotte sphérique 41 à face arrière plane 41b, du manchon 9 poussé par le ressort de centrage 101.

La figure 5 montre le dispositif de transmission 1 de la figure 3 en position installée dans laquelle l"extrémité de la calotte sphérique à l'extrémité 4a de la tige de commande 4 est poussée par le manchon 9, maintenu en charge par le ressort 101 mis en contrainte par rapport au poussoir 5.

La figure 6 montre le deuxième mode de réalisation du dispositif de transmission 1 dont le moyen de rappel élastique 10 est composé de l'anneau élastique 83 engagé dans la gorge 53 de l'alésage 52 du poussoir 5. Ce moyen de rappel élastique fonctionne selon le même principe que le premier mode de réalisation, alignant la tige de commande 4 sur l'axe XX du dispositif pour le montage et ensuite compensant le couple appliqué au poussoir 5 par la tige de commande 4 désaxée.

Les caractéristiques du ressort 101 et de l'anneau élastique 83 peuvent être réglées en fonction du système pour que la partie initiale de la course du poussoir qui est celle la plus utilisée pour les situations de freinage quotidiennes, la force de contact entre le poussoir et la zone de guidage 11 est fortement réduite et de plus, elles sont réparties entre la partie supérieure et la partie inférieure de la zone de guidage. Cela réduit considérablement l'énergie d'usure par la zone de contact.

### NOMENCLATURE DES ELEMENTS PRINCIPAUX (les références présentées sont sans les primes)

- 1: Dispositif de transmission
- 2: Actionneur électromécanique / servofrein électromécanique
21 Corps de l'actionneur
22 Socle
23 Fixation
24 Cylindre
- 3: Tablier
31 Orifice
- 4: Tige de commande
41 Calotte sphérique
41a Face avant sphérique
41b Face arrière plane
42 Coupelle sphérique
- 5: Poussoir
51 Fond
52 Alésage
53 Gorge
- 6: Capteur
- 7: Ressort de rappel
- 8: Liaison à rotule
81 Rotule
82 Anneau
83 Anneau élastique
- 9: Manchon cylindrique
91 Collerette
93 Gorge intérieure
- 10: Moyen de rappel élastique
101 Ressort de centrage
102 Anneau de retenue
- 11-12: Zones de guidage
- 13: Branchements hydrauliques
- 14: Intervalle entre l'avant du manchon 9 et le fond 51 du Poussoir
- 15: Intervalle entre le manchon 9 et l'anneau de retenue 101
- EM: Enceinte du moteur
- H: Habitacle

## Revendications

1. Système de freinage électronique découplé comportant un dispositif de transmission de mouvement reliant l'actionneur de frein (2) à la pédale de frein comportant :
- une tige de commande (4) reliée à la pédale de frein et,
- un poussoir (5) en forme de piston relié à l'actionneur (2) et guidé dans un cylindre (24), d'axe (XX),
* relié à l'extrémité (4a) de la tige de commande (4) par une liaison à rotule (8) et rappelé contre la poussée de la tige de commande (4) par un ressort de rappel (7),
- le poussoir (5) a une surface d'appui en forme de coupelle (51) recevant librement en rotation / pivotement la rotule de la tige de commande (4),
dispositif **caractérisé en ce que**
la tige de commande (4) comporte un moyen de rappel élastique (10) de la tige de commande (4) vers l'axe (XX) du cylindre (24) du poussoir (5), ce moyen de rappel (10) étant porté par le poussoir (5).

2. Système de freinage selon la revendication 1,
**caractérisé en ce que**
le moyen de rappel élastique (10) comprend
- l'extrémité (4a) de la tige de commande (4) comportant une rotule en forme de calotte sphérique (41) ayant une face d'appui avant sphérique (41a) et une face arrière plane (41b), perpendiculaire à l'axe (X1X1) de la tige de commande (4),
- un manchon (9) entourant librement la tige de commande (4) coulissant dans l'alésage (52) du poussoir (5) et s'appuyant, perpendiculairement à l'axe (XX) du poussoir (5), contre la face arrière (41b) de la calotte sphérique (41),
- un ressort (101) prenant appui sur le poussoir (5) et sur le manchon de centrage (9) pour pousser celui-ci et basculer la calotte sphérique (41) et la tige de commande (4) vers l'axe (XX) du poussoir (5) contre le poids de la tige de commande (4).

3. Système de freinage selon la revendication 2,
**caractérisé en ce que**
le manchon (9) comporte une collerette (91) contre laquelle s'appuie d'un côté la surface arrière plane (41b) de la calotte (41) et de l'autre le ressort de centrage (101).

4. Système de freinage selon les revendications 2 et 3,
**caractérisé en ce que**
le ressort de centrage (101) est en appui sur le poussoir (5) par un anneau de retenue (102) encastré dans le poussoir (5).

5. Système de freinage selon la revendication 2,
**caractérisé en ce que**
le ressort de centrage (101) est un ressort hélicoïdal ou un empilage de rondelles Belleville.

6. Système de freinage selon la revendication 1,
**caractérisé en ce que**
le moyen de rappel élastique (10) de la tige de commande vers l'axe (XX) est un anneau élastique (83) emmanché sur la tige de commande (4),
- cet anneau (83) étant retenu en place dans le poussoir (5) par une gorge intérieure (93) du poussoir et,
- l'anneau (83) est engagé de manière serrée sur la tige de commande (4) pour que sa compression par la tige de commande (4) déviée de l'axe (XX) du poussoir (5) contre l'alésage (52) du poussoir (5) génère un couple de rappel vers l'axe (XX).

## Patentansprüche

1. Entkoppeltes elektronisches Bremssystem, das eine Bewegungsübertragungsvorrichtung aufweist, die den Bremsaktuator (2) mit dem Bremspedal verbindet, aufweisend:
- eine Steuerstange (4), die mit dem Bremspedal verbunden ist, und
- einen kolbenförmigen Stößel (5), der mit dem Aktuator (2) verbunden ist und in einem Zylinder (24) geführt wird, mit der Achse (XX),
* der mit dem Ende (4a) der Steuerstange (4) über eine Kugelgelenkverbindung (8) verbunden ist und gegen den Schub der Steuerstange (4) durch eine Rückstellfeder (7) zurückgestellt wird,
- der Stößel (5) hat eine Anlagefläche in Form eines Napfes (51), der das Kugelgelenk der Steuerstange (4) dreh-/schwenkbeweglich aufnimmt (4),
wobei die Vorrichtung **dadurch gekennzeichnet ist, dass** die Steuerstange (4) ein elastisches Rückstellmittel (10) zum Zurückstellen der Steuerstange (4) zu der Achse (XX) des Zylinders (24) des Stößels (5) hin aufweist, wobei dieses Rückstellmittel (10) von dem Stößel (5) getragen wird.

2. Bremssystem nach Anspruch 1,
**dadurch gekennzeichnet, dass**
das elastische Rückstellmittel (10) umfasst
- das Ende (4a) der Steuerstange (4), das ein Kugelgelenk in Form einer Kugelkalotte (41) aufweist, die eine vordere kugelförmige Anlageseite (41a) und eine ebene Rückseite (41b) hat, senkrecht zur Achse (X1X1) der Steuerstange (4),
- eine Hülse (9), die die Steuerstange (4) frei umgibt, in der Bohrung (52) des Stößels (5) gleitet und, senkrecht zur Achse (XX) des Stößels (5), an der Rückseite (41b) der Kugelkalotte (41) anliegt,
- eine Feder (101), die an dem Stößel (5) und an der Zentrierhülse (9) zur Anlage kommt, um diese zu drücken und die Kugelkalotte (41) und die Steuerstange (4) zu der Achse (XX) des Stößels (5) hin gegen das Gewicht der Steuerstange (4) zu kippen.

3. Bremssystem nach Anspruch 2,
**dadurch gekennzeichnet, dass**
die Hülse (9) einen Kragen (91) aufweist, an dem auf einer Seite die ebene Rückseite (41b) der Kalotte (41) und auf der anderen die Zentrierfeder (101) anliegt.

4. Bremssystem nach den Ansprüchen 2 und 3,
**dadurch gekennzeichnet, dass**
die Zentrierfeder (101) an dem Stößel (5) durch einen in den Stößel (5) eingepassten Rückhaltering (5) anliegt.

5. Bremssystem nach Anspruch 2,
**dadurch gekennzeichnet, dass**
die Zentrierfeder (101) eine Schraubenfeder oder ein Stapel aus Tellerfedern ist.

6. Bremssystem nach Anspruch 1,
**dadurch gekennzeichnet, dass**
das elastische Rückstellmittel (10) zum Zurückstellen der Steuerstange zur Achse (XX) hin ein Federring (83) ist, der auf die Steuerstange (4) aufgeschoben ist,
- wobei dieser Ring (83) in dem Stößel (5) durch eine innere Nut (93) des Stößels an 3) seinem Platz gehalten wird,
- wobei der Ring (83) gespannt auf der Steuerstange (4) sitzt, damit sein Zusammendrücken durch die Steuerstange, die von der Achse (XX) des Stößels (5) gegen die Bohrung (52) des Stößels (5) abgelenkt wird, ein Rückstellmoment zu der Achse (XX) hin erzeugt.

## Claims

1. Decoupled electronic braking system comprising a movement transmission device connecting the brake actuator (2) to the brake pedal, comprising:
- a control rod (4) connected to the brake pedal; and
- a pushrod (5) in the form of a piston connected to the actuator (2) and guided in a cylinder (24), of axis (XX),
* connected to the end (4a) of the control rod (4) by a ball joint (8) and returned against the thrust of the control rod (4) by a return spring (7),
- the pushrod (5) has a cup-shaped bearing surface (51) receiving the ball joint of the control rod (4) with this ball joint having the freedom to rotate/pivot freely,
the device being **characterized in that**
the control rod (4) comprises an elastic return means (10) returning the control rod (4) towards the axis (XX) of the cylinder (24) of the pushrod (5), this return means (10) being borne by the pushrod (5).

2. Braking system according to Claim 1,
**characterized in that**
the elastic return means (10) comprises
- the end (4a) of the control rod (4) comprising a ball joint in the form of a sphere portion (41) having a spherical front bearing face (41a) and a planar rear face (41b), perpendicular to the axis (X1X1) of the control rod (4),
- a sleeve (9) freely surrounding the control rod (4), sliding in the bore (52) of the pushrod (5) and pressing, perpendicular to the axis (XX) of the pushrod (5), against the rear face (41b) of the sphere portion (41),
- a spring (101) bearing against the pushrod (5) and against the centring sleeve (9) so as to push the latter and cause the sphere portion (41) and the control rod (4) to tilt towards the axis (XX) of the pushrod (5) against the weight of the control rod (4).

3. Braking system according to Claim 2,
**characterized in that**
the sleeve (9) comprises a flange (91) against one side of which the planar rear surface (41b) of the sphere portion (41) bears and against the other side of which the centring spring (101) bears.

4. Braking system according to Claims 2 and 3,
**characterized in that**
the centring spring (101) bears against the pushrod (5) via a retaining ring (102) that is set into the pushrod (5).

5. Braking system according to Claim 2,
**characterized in that**
the centring spring (101) is a coil spring or a stack of Belleville spring washers.

6. Braking system according to Claim 1,
**characterized in that**
the elastic return means (10) for returning the control rod towards the axis (XX) is an elastic ring (83) pushed onto the control rod (4),
- this ring (83) being held in place in the pushrod (5) by an interior groove (93) of the pushrod, and
- the ring (83) is fitted tightly onto the control rod (4) so that its compression by the control rod (4) deflected away from the axis (XX) of the pushrod (5) against the bore (52) of the pushrod (5) generates a return moment returning it back towards the axis (XX).
